# EUROPEAN PATENT APPLICATION

(11) **EP 4 614 895 A1**
(43) Date of publication of application: **10.09.2025**
(21) Application number: 22963974.5
(22) Date of filing: 03.11.2022
(51) Int. Cl.: H04L 27/00

(54) **SESSION DISTINGUISHING METHOD AND APPARATUS**

(71) Applicant: Beijing Xiaomi Mobile Software Co., Ltd., Beijing 100085 (CN)
(72) Inventor: JIANG, Xiaowei, Beijing 100085 (CN)
(74) Representative: Stöckeler, Ferdinand
(86) International application number: PCT/CN2022/129672
(87) International publication number: WO 2024/092664

(57) **Abstract**

The present application relates to the technical field of communications, and provides a session distinguishing method and apparatus, a device, and a storage medium. The method comprises: in response to sending a sidelink positioning protocol (SLPP) message and/or a ranging and sidelink positioning protocol (RSPP) message to a second terminal device, sending, to the second terminal device, identifier information for session distinguishing. The present invention provides a processing method for the situation of "session distinguishing", so that sessions corresponding to the SLPP message and/or the RSPP message is determined according to the identifier information for session distinguishing. The situation of poor message interaction accuracy is reduced, the accuracy of SLPP message and/or RSPP message determination can be improved, and the accuracy of positioning information determination is improved.

## Description

### TECHNICAL FIELD

The disclosure relates to a field of communication technology, in particular to session distinguishing methods, session distinguishing apparatus, devices and a storage medium.

### BACKGROUND

In a communication system, sidelink (SL) positioning between terminals includes absolute positioning, relative positioning and ranging. For ranging, usually only two terminals are involved, i.e., ranging is performed between two terminals. However, for absolute positioning and relative positioning, multiple auxiliary terminals may be involved, and the multiple auxiliary terminals are involved in positioning to improve the accuracy of the absolute positioning and relative positioning. During a positioning process, a protocol for exchanging positioning messages between two terminals includes a SL positioning protocol (SLPP) and/or a ranging and SL positioning protocol (RSPP). Since the SLPP and/or the RSPP support(s) an establishment of multiple sessions between two terminals, it may be difficult for the terminals to determine which session the interacting SLPP message and/or an RSPP message belongs to, resulting in less accurate message interaction and less accurate determination of positioning information.

### SUMMARY

The disclosure provides session distinguishing methods, session distinguishing apparatus, devices and a storage medium, to determine a session corresponding to an SLPP message and/or an RSPP message according to identifier information for session distinguishing. In this way, an accuracy of message interaction is improved, an accuracy of the SLPP message and/or RSPP message determination can be improved, and the accuracy of positioning information determination can also be improved.

According to a first aspect of embodiments of the disclosure, a session distinguishing method, performed by a first terminal, is provided. The method includes:
in response to sending an SLPP message and/or an RSPP message to a second terminal, sending identifier information for session distinguishing to the second terminal.

Optionally, in an embodiment of the disclosure, in response to sending the SLPP message and/or the RSPP message to the second terminal, sending the identifier information for session distinguishing to the second terminal, includes:
sending the SLPP message and/or the RSPP message to the second terminal, in which the SLPP message and/or the RSPP message include(s) the identifier information for session distinguishing.

Optionally, in an embodiment of the disclosure, in response to sending the SLPP message and/or the RSPP message to the second terminal, sending the identifier information for session distinguishing to the second terminal, includes:
in response to sending the SLPP message and/or the RSPP message to the second terminal, carrying the identifier information for session distinguishing in a transport layer, in which the transport layer is configured to bear the SLPP message and/or the RSPP message.

Optionally, in an embodiment of the disclosure, the transport layer includes at least one of:
a PC5-signaling (PC5-S) transport layer;
a PC5-user plane (PC5-U) transport layer;
a control plane packet data convergence protocol (PDCP) transport layer;
a PC5-radio resource control (PC5-RRC) transport layer; or
a non-access stratum (NAS) transport layer.

Optionally, in an embodiment of the disclosure, carrying the identifier information for session distinguishing in the transport layer, includes:
in response to the transport layer being the PDCP transport layer, adding a first field to a PDCP header of a PDCP Data protocol data unit (PDU), in which the first field is configured to carry the identifier information for session distinguishing.

Optionally, in an embodiment of the disclosure, carrying the identifier information for session distinguishing in the transport layer, includes:
in response to the transport layer being the PC5-S transport layer, sending a PC5-S message to the second terminal, in which the PC5-S message includes a second field, and the second field is configured to carry the identifier information for session distinguishing.

Optionally, in an embodiment of the disclosure, carrying the identifier information for session distinguishing in the transport layer, includes:
in response to the transport layer being the PC5-RRC transport layer, sending an RRC message to the second terminal, in which a header of the RRC message includes a third field, and the third field is configured to carry the identifier information for session distinguishing.

Optionally, in an embodiment of the disclosure, carrying the identifier information for session distinguishing in the transport layer, includes:
in response to the transport layer being the PC5-U transport layer, mapping the SLPP message and/or the RSPP message to a PDU session and/or a quality of service (QoS) flow according to the identifier information for session distinguishing.

Optionally, in an embodiment of the disclosure, carrying the identifier information for session distinguishing in the transport layer, includes:
in response to the transport layer being the NAS transport layer, sending a NAS message to the second terminal, in which the NAS message includes a fourth field, and the fourth field is configured to carry the identifier information for session distinguishing.

Optionally, in an embodiment of the disclosure, sending the identifier information for session distinguishing to the second terminal, includes:
in a case of establishing an SLPP session and/or an RSPP session with the second terminal, sending the identifier information for session distinguishing to the second terminal.

Optionally, in an embodiment of the disclosure, the identifier information for session distinguishing is unique.

Optionally, in an embodiment of the disclosure, the method further includes:
determining the identifier information for session distinguishing according to a session usage identifier, in which the session usage identifier indicates that a session identifier corresponding to the session usage identifier will not be used as the identifier information for session distinguishing within a first duration.

Optionally, in an embodiment of the disclosure, the identifier information for session distinguishing includes at least one of:
session identifier information; or
routing identifier information.

According to a second aspect of embodiments of the disclosure, a session distinguishing method, performed by a second terminal, is provided. The method includes:
in response to receiving an SLPP message and/or an RSPP message sent by a first terminal, receiving identifier information for session distinguishing sent by the first terminal.

According to a third aspect of embodiments of the disclosure, a session distinguishing apparatus, configured on a first terminal, is provided. The apparatus includes:
a sending module, configured to, in response to sending an SLPP message and/or an RSPP message to a second terminal, send identifier information for session distinguishing to the second terminal.

According to a fourth aspect of embodiments of the disclosure, a session distinguishing apparatus, configured on a second terminal, is provided. The apparatus includes:
a receiving module, configured to, in response to receiving an SLPP message and/or an RSPP message sent by a first terminal, receive identifier information for session distinguishing sent by the first terminal.

According to a fifth aspect of embodiments of the disclosure, a first terminal is provided. The device includes a processor and a memory. The memory stores a computer program, and the processor executes the computer program stored in the memory to cause the device to execute the method provided in the embodiments of the first aspect.

According to a sixth aspect of embodiments of the disclosure, a second terminal is provided. The device includes a processor and a memory. The memory stores a computer program, and the processor executes the computer program stored in the memory to cause the device to execute the method provided in the embodiments of the second aspect.

According to a seventh aspect of embodiments of the disclosure, a communication device is provided. The communication device includes: a processor and an interface circuit.

The interface circuit is configured to receive code instructions and transmit the code instructions to the processor.

The processor is configured to run the code instructions to execute the method of the first aspect or the method of the second aspect.

According to an eighth aspect of embodiments of the disclosure, a computer-readable storage medium is provided. The storage medium is configured to store instructions, and when the instructions are executed, the method of the first aspect or the method of the second aspect is implemented.

In conclusion, in the embodiment of the disclosure, in response to sending the LPP message and/or the RSPP message to the second terminal, the first terminal sends the identifier information for session distinguishing to the second terminal. In the embodiment of the disclosure, a session distinguishing mechanism is provided, i.e., sending the SLPP message and/or the RSPP message and the identifier information for session distinguishing to the second terminal, to reduce the situation that the second terminal cannot determine the session corresponding to the SLPP message and/or the RSPP message if the first terminal only sends the SLPP message and/or the RSPP message to the second terminal. The disclosure provides a processing method for a "session distinguishing" scenario. The method determines the session corresponding to the SLPP message and/or the RSPP message according to the identifier information for session distinguishing, so as to improve an accuracy of interacting messages, improve an accuracy of the SLPP message and/or the RSPP message determination, and improve an accuracy of positioning information determination.

### BRIEF DESCRIPTION OF THE DRAWINGS

Above and/or additional aspects and advantages of the disclosure will become apparent and more readily appreciated from the following descriptions of embodiments made with reference to the accompanying drawings, in which:
FIG. 1 is a background diagram of a session distinguishing method provided by an embodiment of the disclosure.
FIG. 2 is a flowchart of a session distinguishing method provided by an embodiment of the disclosure.
FIG. 3 is a flowchart of a session distinguishing method provided by an embodiment of the disclosure.
FIG. 4 is an interactive schematic diagram of a session distinguishing method provided by an embodiment of the disclosure.
FIG. 5 is an interactive schematic diagram of a session distinguishing method provided by an embodiment of the disclosure.
FIG. 6 is an interactive schematic diagram of a session distinguishing method provided by an embodiment of the disclosure.
FIG. 7 is a flowchart of a session distinguishing method provided by an embodiment of the disclosure.
FIG. 8 is a flowchart of a session distinguishing method provided by an embodiment of the disclosure.
FIG. 9 is an interactive schematic diagram of a session distinguishing method provided by an embodiment of the disclosure.
FIG. 10 is a flowchart of a session distinguishing method provided by an embodiment of the disclosure.
FIG. 11 is an interactive schematic diagram of a session distinguishing method provided by an embodiment of the disclosure.
FIG. 12 is an interactive schematic diagram of a session distinguishing method provided by an embodiment of the disclosure.
FIG. 13 is an interactive schematic diagram of a session distinguishing method provided by an embodiment of the disclosure.
FIG. 14 is a schematic diagram of an session distinguishing apparatus provided by an embodiment of the disclosure.
FIG. 15 is a schematic diagram of another session distinguishing apparatus provided by an embodiment of the disclosure.
FIG. 16 is a block diagram of a UE provided by an embodiment of the disclosure.

### DETAILED DESCRIPTION

Reference will now be made in detail to embodiments, examples of which are illustrated in the accompanying drawings. The following description refers to the accompanying drawings in which the same number in different drawings represents the same or similar elements unless otherwise represented. The implementations set forth in the following description of embodiments do not represent all implementations consistent with the embodiments of the disclosure. Instead, they are merely examples of apparatuses and methods consistent with aspects related to the disclosure as recited in the attached claims.

The terms used in the disclosure are only for the purpose of describing specific embodiments, and are not intended to limit the embodiments of the disclosure. The singular forms of "a" and "the" used in the disclosure and attached claims are also intended to include plural forms, unless the context clearly indicates other meanings. It should also be understood that the term "and/or" used herein refers to and includes any or all possible combinations of one or more associated listed items.

It is understandable that although the terms "first", "second", and "third" may be used in the embodiments of the disclosure to describe various types of information, the information should not be limited to these terms. These terms are only used to distinguish the same type of information from each other. For example, without departing from the scope of the embodiments of the disclosure, the first information may also be referred to as the second information, and similarly, the second information may also be referred to as the first information. Depending on the context, the term "if" as used herein may be interpreted as "when", "while" or "in response to determining".

The network elements or network functions involved in the embodiments of the disclosure can be realized by independent hardware devices or by software in the hardware devices, which is not limited in the embodiments of the disclosure.

Positioning based on a SL between user equipments (UEs) includes absolute positioning, relative positioning and ranging. Absolute positioning is to determine absolute coordinates of the UE, relative positioning is to determine the coordinates of the UE relative to a reference point, and ranging is to determine a distance and/or an angle of the UE relative to a reference point. Usually, ranging refers to ranging between only two UEs, but absolute positioning and relative positioning may involve multiple auxiliary UEs to participate in positioning.

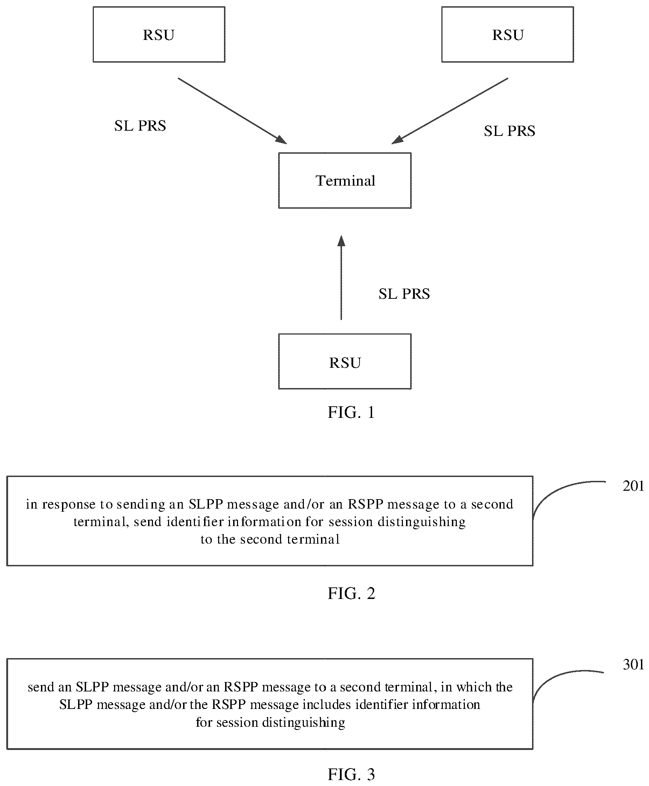

FIG. 1 is a background diagram of a session distinguishing method provided by an embodiment of the disclosure. As illustrated in FIG. 1, taking a downlink time difference of arrival (DL-TDOA)-based positioning method as an example, a plurality of road side units (RSUs) may be set on the roadside, and each RSU may, for example, correspond to fixed position information. The UE may determine a specific position of the UE relative to the RSUs based on a measurement of positioning signals sent by the RSUs over SL. For example, there may be three or more RSUs. For example, each positioning signal may include position information of a corresponding RSU, and the UE may measure a TDOA of three positioning signals sent by three RSUs. Based on the TDOA of the three positioning signals and the position information of respective RSU, the UE may determine the position information of the UE or the position information of the UE relative to a certain RSU.

In addition to DL-TDOA, other positioning solutions include an uplink-TDOA (UL-TDOA), a multiple round trip time (multiple RTT), an angle-of-arrival (AOA) or an angle-of-departure (AOD), carrier phase positioning, etc. If the positioning result is not absolute position coordinates converted based on absolute position information such as a Global Positioning System (GPS) of the RSU, the positioning result is relative positioning, otherwise, it is absolute positioning. A RSU involved in relative positioning or absolute positioning is a positioning-assisting UE.

In an embodiment of the disclosure, if positioning involves only two UEs, the two are each other's positioning-assisting UE.

In an embodiment of the disclosure, there are different types of positioning-assisting UEs, such as positioning-assisting UEs of RSU type. The positioning-assisting UEs of the RSU type belong to an infrastructure, and it can provide positioning service by collaborating with other RSUs. For example, an ordinary UE can also be used as a positioning-assisting UE, and it is difficult for it to assist in providing positioning services together with other UEs. In addition, some positioning-assisting UEs have position information such as GPS, which can assist other UEs to preform absolute positioning, and some other positioning-assisting UEs may not have position information such as GPS.

Session distinguishing methods, session distinguishing apparatus, devices and a storage medium provided by the embodiments of the disclosure will be described in detail with reference to the accompanying drawings.

FIG. 2 is a flowchart of a session distinguishing method provided by an embodiment of the disclosure. The method is performed by a first terminal. As illustrated in FIG. 2, the method includes the following steps.

At step 201, in response to sending an SLPP message and/or an RSPP message to a second terminal, identifier information for session distinguishing is sent to the second terminal.

It is noted that in an embodiment of the disclosure, the UE may be a device that provides voice and/or data connectivity to a user. The UE may communicate with one or more core networks via a Radio Access Network (RAN). The UE may be an Internet of Things (IoT) UE, such as a sensor device, a cell phone (or "cellular" phone), and a computer with the IoT UE. For example, the UE may be a stationary, portable, pocket-sized, handheld, computer-built, or in-vehicle device, such as, a Station (STA), a subscriber unit, a subscriber station, a mobile station, a mobile, a remote station, an access point, a remote terminal, an access terminal, a user terminal, or a user agent. Alternatively, the UE may be an unmanned aerial vehicle device. Alternatively, the UE may be an in-vehicle device, for example, an electronic control unit (ECU) having a wireless communication function, or a wireless UE external to the ECU. Alternatively, the UE may also be a roadside device, for example, a street light, a signal light, or other roadside devices having a wireless communication function.

In an embodiment of the disclosure, the first terminal may interact with the second terminal withe positioning messages. The protocols for interacting the positioning messages between the first terminal and the second terminal include, but is not limited to, an SLPP protocol and an RSPP protocol. The first terminal may be, for example, an RSU.

In an embodiment of the disclosure, the identifier information for session distinguishing may for example be a session identifier for distinguishing different sessions.

In an embodiment of the disclosure, in response to sending the SLPP message and/or the RSPP message to the second terminal, sending the identifier information for session distinguishing to the second terminal, includes:
sending the SLPP message and/or the RSPP message to the second terminal, in which the SLPP message and/or the RSPP message includes the identifier information for session distinguishing.

In an embodiment of the disclosure, the first terminal may carry identifier information for session distinguishing in the SLPP message and/or the RSPP message. That is, when the first terminal sends the SLPP message and/or the RSPP message to the second terminal, since the SLPP message and/or the RSPP message carries the identifier information for session distinguishing, the first terminal may send the identifier information for session distinguishing to the second terminal.

For example, in an embodiment of the disclosure, if using PC5-U as the transport layer, different sessions can be identified by adding identification information that distinguishes session IDs in SLPP message and/or the RSPP message.

In an embodiment of the disclosure, in response to sending the SLPP message and/or the RSPP message to the second terminal, sending the identifier information for session distinguishing to the second terminal may include: in response to sending the SLPP message and/or the RSPP message to the second terminal, the identifier information for session distinguishing may be carried in a transport layer, in which the transport layer is used to carry the SLPP message and/or the RSPP message.

For example, in an embodiment of the disclosure, the transport layer includes at least one of:
a PC5-S transport layer;
a PC5-U transport layer;
a control plane PDCP transport layer;
a PC5-RRC transport layer; or
a NAS transport layer.

In an embodiment of the disclosure, the identifier information for session distinguishing includes, but is not limited to, the session identifier (session ID) information and the routing identifier (routing ID) information. An SLPP layer and/or an RSPP layer may send session information to the transport layer. The session information may be, for example, a session ID, and the transport layer can map the session ID to a routing ID, or directly use the session ID as the routing ID.

For example, in an embodiment of the disclosure, carrying the identifier information for session distinguishing in the transport layer, includes:
in response to the transport layer being the PDCP transport layer, adding a first field to a PDCP header of a PDCP Data PDU, in which the first field is used to carry the identifier information for session distinguishing.

In an embodiment of the disclosure, the first field refers to a field added to the PDCP header of the PDCP Data PDU. The first field is named like that only to distinguish it from other fields. The first field does not specifically refer to a certain field. For example, in response to a change of length of an ID corresponding to the first field, the first field changes accordingly. The ID length refers to the length of a session ID or a routing ID. The ID length may be any value from 1 to 16. For example, the ID length may be 8 bits, and the ID length may also be 4 bits.

For example, in an embodiment of the disclosure, carrying the identifier information for session distinguishing in the transport layer, includes:
in response to the transport layer being the PC5-S transport layer, sending a PC5-S message to the second terminal, in which the PC5-S message includes a second field, and the second field is used to carry the identifier information for session distinguishing.

In an embodiment of the disclosure, the second field refers to a field in the PC5-S message for carrying the identifier information for session distinguishing. The second field is named like that only to distinguish it from other fields, and it does not specifically refer to a fixed field. For example, in response to a change of the identifier information for session distinguishing, the second field changes accordingly.

For example, in an embodiment of the disclosure, for example, for message in PC5-S that is used to carry upper layer messages, a second field may be included in the header of the message to carry a routing ID or a session ID.

For example, in an embodiment of the disclosure, carrying the identifier information for session distinguishing in the transport layer, includes:
in response to the transport layer being the PC5-RRC transport layer, sending an RRC message to the second terminal, in which a header of the RRC message includes a third field, and the third field is used to carry the identifier information for session distinguishing.

In an embodiment of the disclosure, the third field refers to a field used to carry the identifier information for session distinguishing in the RRC message. The third field is named like that only to distinguish it from other fields, and it does not specifically refer to a fixed field. For example, in response to a change of the identifier information for session distinguishing, the third field changes accordingly.

For example, in an embodiment of the disclosure, carrying the identifier information for session distinguishing in the transport layer, includes:
in response to the transport layer being the PC5-U transport layer, mapping the SLPP message and/or the RSPP message to a PDU session and/or a QoS flow according to the identifier information for session distinguishing.

In an embodiment of the disclosure, if the transport layer is the PC5-U, the SLPP messages and/or the RSPP messages of different sessions can be mapped to different PDU sessions and/or QoS flows by proximity services (ProSe) and/or a V2X layer.

For example, in an embodiment of the disclosure, the SLPP layer and/or the RSPP layer send(s) corresponding session information to the ProSe and/or the V2X layer. The session information may be a session ID, and the ProSe and/or the V2X layer may map the session ID to a routing ID, or directly use the session ID as the routing ID.

For example, in an embodiment of the disclosure, carrying the identifier information for session distinguishing in the transport layer, includes:
in response to the transport layer being the NAS transport layer, sending a NAS message to the second terminal, in which the NAS message includes a fourth field, and the fourth field is used to carry the identifier information for session distinguishing.

In an embodiment of the disclosure, the fourth field refers to a field used to carry the identifier information for session distinguishing in the NAS message. The fourth field is named like that only to distinguish it from other fields, and it does not specifically refer to a fixed field. For example, in response to a change of the identifier information for session distinguishing, the fourth field changes accordingly.

For example, in an embodiment of the disclosure, sending the identifier information for session distinguishing to the second terminal, includes:
in response to establishing an SLPP session and/or an RSPP session with the second terminal, sending the identifier information for session distinguishing to the second terminal.

When the first terminal establishes an SLPP session and/or an RSPP session with the second terminal, the first terminal may send a message for establishing the SLPP session and/or the RSPP session to the second terminal. The message corresponding to the SLPP session and/or the RSPP session carries the identifier information for session distinguishing. That is, the first terminal may send the identifier information for session distinguishing to the second terminal.

For example, in an embodiment of the disclosure, the identifier information for session distinguishing is used for subsequent messages in the session.

In an embodiment of the disclosure, when the first terminal sends SLPP/RSPP messages that belong to the same session, there message all carry the session ID at the time the session was established.
In an embodiment of the disclosure, the identifier information for session distinguishing is unique.

For example, in an embodiment of the disclosure, if an ID that identifies a session is in use, the first terminal cannot use the ID to give a new reply, but can only select an ID from an ID set that is not currently in use. The ID set refers to a set that includes at least one session ID.

In an embodiment of the disclosure, the method further includes:
determining the identifier information for session distinguishing according to a session usage identifier, in which the session usage identifier is used for indicating that a session identifier corresponding to the session usage identifier will not be used as the identifier information for session distinguishing within a first duration.

For example, in an embodiment of the disclosure, the first duration does not refer to a fixed duration. The first duration may be a duration configured by a network side device, or may be a duration determined according to a pre-configuration. The first duration may be, for example, 10 minutes. After an end of a session, an ID of the session that is used to identify the session will not be used again within the first duration.

In an embodiment of the disclosure, the identifier information for session distinguishing is determined according to a session usage identifier, which is used for indicating that the session identifier corresponding to the session usage identifier will not be used as the identifier information for session distinguishing within the first duration. In detail, for example, the session identifier corresponding to the session usage identifier will not be used as the identifier information for session distinguishing within the first duration after the end of use.

In an embodiment of the disclosure, the identifier information for session distinguishing includes at least one of:
session ID information; or
routing ID information.

In conclusion, in these embodiments of the disclosure, in response to sending the SLPP message and/or the RSPP message to the second terminal, the first terminal sends the identifier information for session distinguishing to the second terminal. In these embodiments of the disclosure, a session distinguishing mechanism is provided, i.e., sending the SLPP message and/or the RSPP message and the identifier information for session distinguishing to the second terminal, to reduce the situation that the second terminal cannot determine the session corresponding to the SLPP message and/or the RSPP message if the first terminal only sends the SLPP message and/or the RSPP message to the second terminal. The disclosure provides a processing method for a "session distinguishing" scenario. The method determines the session corresponding to the SLPP message and/or the RSPP message according to the identifier information for session distinguishing, so as to improve an accuracy of interacting messages, improve an accuracy of the SLPP message and/or the RSPP message determination, and improve an accuracy of positioning information determination.

FIG. 3 is a flowchart of a session distinguishing method provided by an embodiment of the disclosure. The method is performed by a first terminal. As illustrated in FIG. 3, the method includes the following steps.

At step 301, an SLPP message and/or an RSPP message is sent to a second terminal, in which the SLPP message and/or the RSPP message includes identifier information for session distinguishing.

In an embodiment of the disclosure, the identifier information for session distinguishing includes at least one of:
a session ID information; or
a routing ID information.

In an embodiment of the disclosure, the second terminal refers to a terminal that interacts positioning information with the first terminal, and the second terminal does not specifically refer to a certain fixed terminal. For example, if a terminal ID of the second terminal changes, the second terminal also changes accordingly.

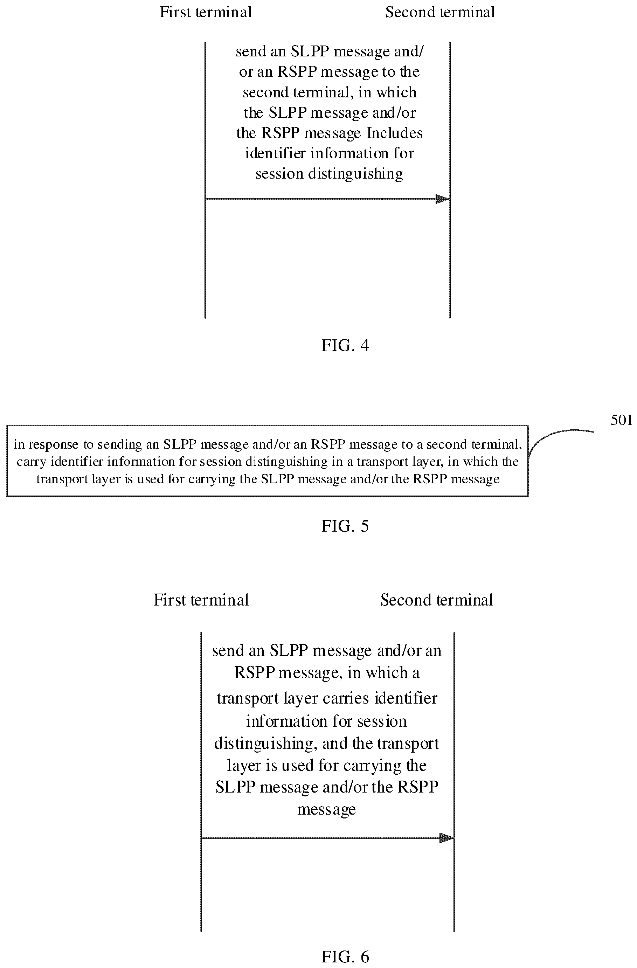

In an embodiment of the disclosure, FIG. 4 is an interactive schematic diagram of a session distinguishing method provided by an embodiment of the disclosure. As illustrated in FIG. 4, the first terminal sends the SLPP message and/or the RSPP message to the second terminal, in which the SLPP message and/or the RSPP message includes the identifier information for session distinguishing. That is, the first terminal carries the identifier information for session distinguishing in the SLPP message and/or the RSPP message. That is, when the first terminal sends the SLPP message and/or the RSPP message to the second terminal, since the SLPP message and/or the RSPP message carries the identifier information for session distinguishing, the first terminal may send the identifier information for session distinguishing to the second terminal.

For example, in an embodiment of the disclosure, in response to the transport layer being the PC5-S, the identifier information for distinguishing session ID is added to the SLPP message and/or the RSPP message to identify different sessions.

In conclusion, in these embodiment of the disclosure, the first terminal sends the SLPP message and/or the RSPP message to the second terminal, in which the SLPP message and/or the RSPP message includes the identifier information for session distinguishing. In these embodiments of the disclosure, a session distinguishing mechanism is provided, i.e., sending the SLPP message and/or the RSPP message and the identifier information for session distinguishing to the second terminal, to reduce the situation that the second terminal cannot determine the session corresponding to the SLPP message and/or the RSPP message if the first terminal only sends the SLPP message and/or the RSPP message to the second terminal. The disclosure specifically discloses a scheme of carrying the identifier information for session distinguishing in the SLPP message and/or the RSPP message. The disclosure provides a processing method for a "session distinguishing" scenario. The method determines the session corresponding to the SLPP message and/or the RSPP message according to the identifier information for session distinguishing, so as to improve an accuracy of exchanging messages, improve an accuracy of the SLPP message and/or the RSPP message determination, and improve an accuracy of positioning information determination.

FIG. 5 is a flowchart of a session distinguishing method provided by an embodiment of the disclosure. The method is performed by a first terminal. As illustrated in FIG. 5, the method includes the following steps.

At step 501, in response to sending an SLPP message and/or an RSPP message to a second terminal, identifier information for session distinguishing is carried in a transport layer, in which the transport layer is used for carrying the SLPP message and/or the RSPP message.

In an embodiment of the disclosure, the transport layer includes at least one of:
a PC5-S transport layer;
a PC5-U transport layer;
a control plane PDCP transport layer;
a PC5-RRC transport layer; or
a NAS transport layer.

In an embodiment of the disclosure, the identifier information for session distinguishing includes at least one of:
a session ID information; or
a routing ID information.

In an embodiment of the disclosure, the identifier information for session distinguishing includes, but is not limited to, the session ID information and the routing ID information. An SLPP layer and/or an RSPP layer sends session information, such as a session ID, to the transport layer, and the transport layer maps the session ID to a routing ID, or directly use the session ID as the routing ID.

In an embodiment of the disclosure, FIG. 6 is an interactive schematic diagram of a session distinguishing method provided by an embodiment of the disclosure. As illustrated in FIG. 6, in response to sending an SLPP message and/or an RSPP message to a second terminal, a first terminal may carry identifier information for session distinguishing in a transport layer. The transport layer is used for carrying the SLPP message and/or the RSPP message.

In conclusion, in these embodiments of the disclosure, in response to sending the SLPP message and/or the RSPP message to the second terminal, the identifier information for session distinguishing is carried in the transport layer, in which the transport layer is used for carrying the SLPP message and/or the RSPP message. In these embodiments of the disclosure, a session distinguishing mechanism is provided, i.e., sending the SLPP message and/or the RSPP message and the identifier information for session distinguishing to the second terminal, to reduce the situation that the second terminal cannot determine the session corresponding to the SLPP message and/or the RSPP message if the first terminal only sends the SLPP message and/or the RSPP message to the second terminal. The disclosure specifically discloses a scheme of carrying the identifier information for session distinguishing in the transport layer. The disclosure provides a processing method for a "session distinguishing" scenario. The method determines the session corresponding to the SLPP message and/or the RSPP message according to the identifier information for session distinguishing, so as to improve an accuracy of interacting messages, improve an accuracy of the SLPP message and/or the RSPP message determination, and improve an accuracy of positioning information determination.

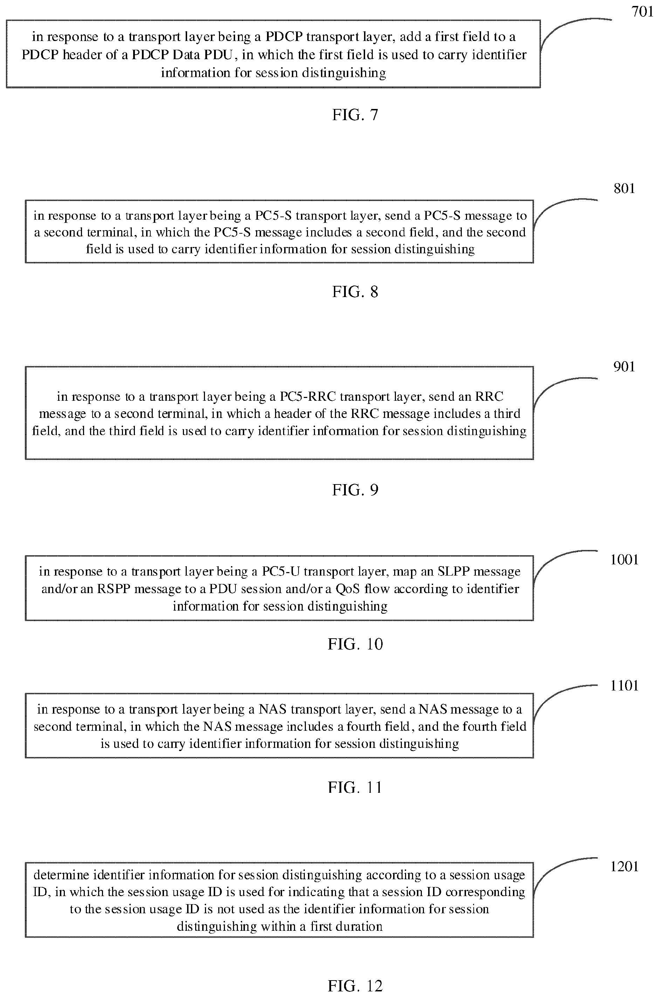

FIG. 7 is a flowchart of a session distinguishing method provided by an embodiment of the disclosure. The method is performed by a first terminal. As illustrated in FIG. 7, the method includes the following steps.

At step 701, in response to a transport layer being a PDCP transport layer, a first field is added to a PDCP header of a PDCP Data PDU, in which the first field is used to carry identifier information for session distinguishing.

In an embodiment of the disclosure, the identifier information for session distinguishing includes at least one of:
a session ID information; or
a routing ID information.

In an embodiment of the disclosure, the first field refers to a field added to the PDCP header of the PDCP Data PDU. The first field is named like that only to distinguish it from other fields. The first field does not specifically refer to a certain field. For example, when a length of an ID corresponding to the first field changes, the first field also changes accordingly. The ID length refers to a length of a session ID or a routing ID. The ID length can be any value from 1 to 16. For example, the ID length may be 8 bits, or 4 bits.

In conclusion, in these embodiments of the disclosure, in response to the transport layer being the PDCP, the first field is added to the PDCP header of the PDCP Data PDU, in which the first field is used to carry the identifier information for session distinguishing. In these embodiments of the disclosure, a session distinguishing mechanism is provided, i.e., sending the SLPP message and/or the RSPP message and the identifier information for session distinguishing to the second terminal, to reduce the situation that the second terminal cannot determine the session corresponding to the SLPP message and/or the RSPP message if the first terminal only sends the SLPP message and/or the RSPP message to the second terminal. Embodiments of the disclosure disclose a scheme of sending the identifier information for session distinguishing in the PDCP transport layer. The disclosure provides a processing method for a "session distinguishing" scenario. The method determines the session corresponding to the SLPP message and/or the RSPP message according to the identifier information for session distinguishing, so as to improve an accuracy of interacting messages, improve an accuracy of the SLPP message and/or the RSPP message determination, and improve an accuracy of positioning information determination.

FIG. 8 is a flowchart of a session distinguishing method provided by an embodiment of the disclosure. The method is performed by a first terminal. As illustrated in FIG. 8, the method includes the following steps.

At step 801, in response to a transport layer being a PC5-S transport layer, a PC5-S message is sent to a second terminal, in which the PC5-S message includes a second field, and the second field is used to carry identifier information for session distinguishing.

In an embodiment of the disclosure, the identifier information for session distinguishing includes at least one of:
a session ID information; or
a routing ID information.

In an embodiment of the disclosure, the second field refers to a field in the PC5-S message for carrying the identifier information for session distinguishing. The second field is named like that only to distinguish it from other fields, and it does not specifically refer to a fixed field. For example, when the identifier information for session distinguishing changes, the second field changes accordingly.

For example, in an embodiment of the disclosure, for example, for a PC5-S message that is used to carry an upper layer message, a second field is added to in a header of the message for carrying a routing ID or a session ID.

In conclusion, in these embodiments of the disclosure, in response to the transport layer being the PC5-S, the PC5-S message is sent to the second terminal, in which the PC5-S message includes the second field for carrying the identifier information for session distinguishing. In these embodiments of the disclosure, a session distinguishing mechanism is provided, i.e., sending the SLPP message and/or the RSPP message and the identifier information for session distinguishing to the second terminal, to reduce the situation that the second terminal cannot determine the session corresponding to the SLPP message and/or the RSPP message if the first terminal only sends the SLPP message and/or the RSPP message to the second terminal. Embodiments of the disclosure disclose a scheme of sending the identifier information for session distinguishing in the PC5-S transport layer. The disclosure provides a processing method for a "session distinguishing" scenario. The method determines the session corresponding to the SLPP message and/or the RSPP message according to the identifier information for session distinguishing, so as to improve an accuracy of interacting messages, improve an accuracy of the SLPP message and/or the RSPP message determination, and improve an accuracy of positioning information determination.

FIG. 9 is a flowchart of a session distinguishing method provided by an embodiment of the disclosure. The method is performed by a first terminal. As illustrated in FIG. 9, the method includes the following steps.

At step 901, in response to a transport layer being a PC5-RRC transport layer, an RRC message is sent to a second terminal, in which a header of the RRC message includes a third field, and the third field is used to carry identifier information for session distinguishing.

In an embodiment of the disclosure, the identifier information for session distinguishing includes at least one of:
a session ID information; or
a routing ID information.

In an embodiment of the disclosure, the third field refers to a field in the RRC message for carrying the identifier information for session distinguishing. The third field is named like that only to distinguish it from other fields, and it does not specifically refer to a fixed field. For example, when the identifier information for session distinguishing changes, the third field changes accordingly.

In conclusion, in these embodiments of the disclosure, in response to the transport layer being the PC5-RRC, which is a control plane high layer protocol transport layer, the RRC message is sent to the second terminal. The header of the RRC message includes the third field, and the third field is used to carry the identifier information for session distinguishing. In these embodiments of the disclosure, a session distinguishing mechanism is provided, i.e., sending the SLPP message and/or the RSPP message and the identifier information for session distinguishing to the second terminal, to reduce the situation that the second terminal cannot determine the session corresponding to the SLPP message and/or the RSPP message if the first terminal only sends the SLPP message and/or the RSPP message to the second terminal. Embodiments of the disclosure disclose a scheme of sending the identifier information for session distinguishing in the PC5-RRC transport layer. The disclosure provides a processing method for a "session distinguishing" scenario. The method determines the session corresponding to the SLPP message and/or the RSPP message according to the identifier information for session distinguishing, so as to improve an accuracy of interacting messages, improve an accuracy of the SLPP message and/or the RSPP message determination, and improve an accuracy of positioning information determination.

FIG. 10 is a flowchart of a session distinguishing method provided by an embodiment of the disclosure. The method is performed by a first terminal. As illustrated in FIG. 10, the method includes the following steps.

At step 1001, in response to a transport layer being a PC5-U transport layer, an SLPP message and/or an RSPP message is mapped to a PDU session and/or a QoS flow according to identifier information for session distinguishing.

In an embodiment of the disclosure, the identifier information for session distinguishing includes at least one of:
a session ID information; or
a routing ID information.

In an embodiment of the disclosure, in response to the transport layer being the PC5-U, SLPP messages and/or RSPP messages of different sessions are mapped to different PDU sessions and/or QoS flows by a ProSe and/or a V2X layer.

For example, in an embodiment of the disclosure, an SLPP and/or an RSPP layer informs a ProSe and/or a V2X layer of corresponding session information, such as a session ID, and the ProSe and/or the V2X layer may map the session ID to a routing ID, or directly use the session ID as the routing ID.

In conclusion, in these embodiments of the disclosure, when the transport layer is the PC5-U, the SLPP message and/or the RSPP message is/are mapped to the PDU session and/or the QoS flow according to the identifier information for session distinguishing. In these embodiments of the disclosure, a session distinguishing mechanism is provided, i.e., sending the SLPP message and/or the RSPP message and the identifier information for session distinguishing to the second terminal, to reduce the situation that the second terminal cannot determine the session corresponding to the SLPP message and/or the RSPP message if the first terminal only sends the SLPP message and/or the RSPP message to the second terminal. Embodiments of the disclosure disclose a scheme of sending the identifier information for session distinguishing in the PC5-U transport layer. The disclosure provides a processing method for a "session distinguishing" scenario. The method determines the session corresponding to the SLPP message and/or the RSPP message according to the identifier information for session distinguishing, so as to improve an accuracy of interacting messages, improve an accuracy of the SLPP message and/or the RSPP message determination, and improve an accuracy of positioning information determination.

FIG. 11 is a flowchart of a session distinguishing method provided by an embodiment of the disclosure. The method is performed by a first terminal. As illustrated in FIG. 11, the method includes the following steps.

At step 1101, in response to a transport layer being a NAS transport layer, a NAS message is sent to a second terminal, in which the NAS message includes a fourth field, and the fourth field is used to carry identifier information for session distinguishing.

In an embodiment of the disclosure, the identifier information for session distinguishing includes at least one of:
a session ID information; or
a routing ID information.

In an embodiment of the disclosure, the fourth field refers to a field used to carry the identifier information for session distinguishing in the NAS message. The fourth field is named like that only to distinguish it from other fields, and it does not specifically refer to a fixed field. For example, when the identifier information for session distinguishing changes, the fourth field changes accordingly.

In conclusion, in these embodiments of the disclosure, in response to the transport layer being the NAS, the NAS message is sent to the second terminal, in which the NAS message includes the fourth field, and the fourth field is used to carry the identifier information for session distinguishing. In these embodiments of the disclosure, a session distinguishing mechanism is provided, i.e., sending the SLPP message and/or the RSPP message and the identifier information for session distinguishing to the second terminal, to reduce the situation that the second terminal cannot determine the session corresponding to the SLPP message and/or the RSPP message if the first terminal only sends the SLPP message and/or the RSPP message to the second terminal. Embodiments of the disclosure disclose a scheme of sending the identifier information for session distinguishing in the NAS transport layer. The disclosure provides a processing method for a "session distinguishing" scenario. The method determines the session corresponding to the SLPP message and/or the RSPP message according to the identifier information for session distinguishing, so as to improve an accuracy of interacting messages, improve an accuracy of the SLPP message and/or the RSPP message determination, and improve an accuracy of positioning information determination.

FIG. 12 is a flowchart of a session distinguishing method provided by an embodiment of the disclosure. The method is performed by a first terminal. As illustrated in FIG. 12, the method includes the following steps.

At step 1201, identifier information for session distinguishing is determined according to a session usage identifier, in which the session usage identifier is used for indicating that a session identifier corresponding to the session usage identifier is not used as identifier information for session distinguishing within a first duration.

In an embodiment of the disclosure, the identifier information for session distinguishing includes at least one of:
a session ID information; or
a routing ID information.

In an embodiment of the disclosure, the identifier information for session distinguishing is unique.

For example, in an embodiment of the disclosure, if an ID that identifies a session is in use, the first terminal cannot use the ID to give a new reply, and it can only select a currently unused ID from an ID set.

For example, in an embodiment of the disclosure, the first duration does not refer to a fixed duration. The first duration may be a duration configured by a network side device, or a duration determined according to a pre-configuration. The first duration may be, for example, 10 minutes. After an end of a session, the ID used by the session to identify the session will not be used again within the first duration.

In an embodiment of the disclosure, the identifier information for session distinguishing is determined according to the session usage ID, in which the session usage ID is used to indicate that the session ID corresponding to the session usage ID will not be used as the identifier information for session distinguishing within the first duration. For example, the session ID corresponding to the session usage ID will not be used as the identifier information for session distinguishing within the first duration after the end of use.

In conclusion, in these embodiments of the disclosure, the identifier information for session distinguishing is determined according to the session usage ID, in which the session usage ID is used to indicate that the session ID corresponding to the session usage ID will not be used as the identifier information for session distinguishing within the first duration. In these embodiments of the disclosure, a session distinguishing mechanism is provided, i.e., sending the SLPP message and/or the RSPP message and the identifier information for session distinguishing to the second terminal, to reduce the situation that the second terminal cannot determine the session corresponding to the SLPP message and/or the RSPP message if the first terminal only sends the SLPP message and/or the RSPP message to the second terminal. Embodiments of the disclosure disclose that the identifier information for session distinguishing is determined according to the session usage ID to avoid the situation that different sessions cannot be distinguished due to repeated use of session ID, which improves the accuracy of determining the identifier information for session distinguishing. The disclosure provides a processing method for a "session distinguishing" scenario. The method determines the session corresponding to the SLPP message and/or the RSPP message according to the identifier information for session distinguishing, so as to improve an accuracy of interacting messages, improve an accuracy of the SLPP message and/or the RSPP message determination, and improve an accuracy of positioning information determination.

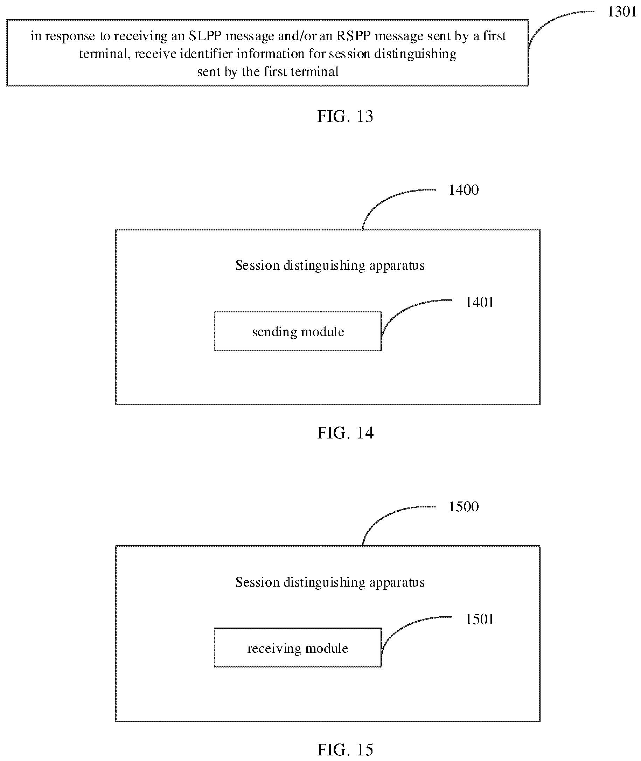

FIG. 13 is a flowchart of a session distinguishing method provided by an embodiment of the disclosure. The method is performed by a second terminal. As illustrated in FIG. 13, the method includes the following steps.

At step 1301, in response to receiving an SLPP message and/or an RSPP message sent by a first terminal, identifier information for session distinguishing sent by the first terminal is received.

In an embodiment of the disclosure, the second terminal receives the SLPP message and/or the RSPP message sent by the first terminal, in which the SLPP message and/or the RSPP message includes the identifier information for session distinguishing. That is, the second terminal receives the SLPP message and/or the RSPP message and receives the identifier information for session distinguishing.

In an embodiment of the disclosure, when the second terminal receives the SLPP message and/or the RSPP message sent by the first terminal, the first terminal may carry the identifier information for session distinguishing in the transport layer, in which the transport layer is used for carrying the SLPP message and/or the RSPP message, and the second terminal can obtain the identifier information for session distinguishing.

The transport layer includes at least one of:
a PC5-S transport layer;
a PC5-U transport layer;
a control plane PDCP transport layer;
a PC5-RRC transport layer; or
a NAS transport layer.

In an embodiment of the disclosure, in response to the transport layer being a PDCP transport layer, the second terminal determines a first field in a PDCP header of a PDCP Data PDU, in which the first field is used to carry the identifier information for session distinguishing. That is, the second terminal may receive the identifier information for session distinguishing.

In an embodiment of the disclosure, in response to the transport layer being a PC5-S transport layer, the second terminal receives a PC5-S message sent by the first terminal, in which the PC5-S message includes a second field, and the second field is used to carry the identifier information for session distinguishing.

In an embodiment of the disclosure, in response to the transport layer being a PC5-RRC transport layer, the second terminal receives an RRC message sent by the first terminal, in which a header of the RRC message includes a third field, and the third field is used to carry the identifier information for session distinguishing.

In an embodiment of the disclosure, in response to the transport layer being a PC5-U transport layer, since the first terminal maps an SLPP message and/or an RSPP message to a PDU session and/or a QoS flow according to identifier information for session distinguishing, the second terminal can determine the identifier information for session distinguishing from the PDU session and/or the QoS flow.

In an embodiment of the disclosure, in response to the transport layer being a NAS transport layer, the second terminal receives a NAS message sent by the first terminal, in which the NAS message includes a fourth field, and the fourth field is used to carry identifier information for session distinguishing.

In an embodiment of the disclosure, in response to establishing an SLPP session and/or an RSPP session with the first terminal, the second terminal receives identifier information for session distinguishing sent by the first terminal.

In an embodiment of the disclosure, the identifier information for session distinguishing is unique.

In conclusion, in these embodiments of the disclosure, when receiving the SLPP message and/or the RSPP message sent by the first terminal, the second terminal receives identifier information for session distinguishing sent by the first terminal. In these embodiments of the disclosure, a session distinguishing mechanism is provided, i.e., receiving the SLPP message and/or the RSPP message and the identifier information for session distinguishing sent by the first terminal, to reduce the situation that the second terminal cannot determine the session corresponding to the SLPP message and/or the RSPP message if the first terminal only sends the SLPP message and/or the RSPP message to the second terminal. The disclosure provides a processing method for a "session distinguishing" scenario. The method determines the session corresponding to the SLPP message and/or the RSPP message according to the identifier information for session distinguishing, so as to improve an accuracy of interacting messages, improve an accuracy of the SLPP message and/or the RSPP message determination, and improve an accuracy of positioning information determination.

FIG. 14 is a schematic diagram of an apparatus 1400 for distinguishing a session provided by an embodiment of the disclosure. As illustrated in FIG. 14, the apparatus 1400 may be configured in a first terminal. The apparatus 1400 includes:
a sending module 1401, configured to, in response to sending an SLPP message and/or an RSPP message to a second terminal, send identifier information for session distinguishing to the second terminal.

In conclusion, in the session distinguishing apparatus of this embodiment of the disclosure, the sending module sends the identifier information for session distinguishing to the second terminal in response to sending the SLPP message and/or the RSPP message to the second terminal. In these embodiments of the disclosure, a session distinguishing mechanism is provided, i.e., sending the SLPP message and/or the RSPP message and the identifier information for session distinguishing to the second terminal, to reduce the situation that the second terminal cannot determine the session corresponding to the SLPP message and/or the RSPP message if the first terminal only sends the SLPP message and/or the RSPP message to the second terminal. The disclosure provides a processing apparatus for a "session distinguishing" scenario. The apparatus determines the session corresponding to the SLPP message and/or the RSPP message according to the identifier information for session distinguishing, so as to improve an accuracy of interacting messages, improve an accuracy of the SLPP message and/or the RSPP message determination, and improve an accuracy of positioning information determination.

Optionally, in an embodiment of the disclosure, in response to sending the SLPP message and/or the RSPP message to the second terminal, the sending module 1401 is configured to send the identifier information for session distinguishing to the second terminal, including:
sending the SLPP message and/or the RSPP message to the second terminal, in which the SLPP message and/or the RSPP message include(s) the identifier information for session distinguishing.

Optionally, in an embodiment of the disclosure, in response to sending the SLPP message and/or the RSPP message to the second terminal, the sending module 1401 is configured to send the identifier information for session distinguishing to the second terminal, including:
in response to sending the SLPP message and/or the RSPP message to the second terminal, carrying the identifier information for session distinguishing in a transport layer, in which the transport layer is used for carrying the SLPP message and/or the RSPP message.

Optionally, in an embodiment of the disclosure, the transport layer includes at least one of:
a PC5-S transport layer;
a PC5-U transport layer;
a control plane PDCP transport layer;
a PC5-RRC transport layer; or
a NAS transport layer.

Optionally, in an embodiment of the disclosure, the sending module 1401 is configured to carry the identifier information for session distinguishing in the transport layer, including:
in response to the transport layer being the PDCP transport layer, adding a first field to a PDCP header of a PDCP Data PDU, in which the first field is used to carry the identifier information for session distinguishing.

Optionally, in an embodiment of the disclosure, the sending module 1401 is configured to carry the identifier information for session distinguishing in the transport layer, including:
in response to the transport layer being the PC5-S transport layer, sending a PC5-S message to the second terminal, in which the PC5-S message includes a second field, and the second field is used to carry the identifier information for session distinguishing.

Optionally, in an embodiment of the disclosure, the sending module 1401 is configured to carry the identifier information for session distinguishing in the transport layer, including:
in response to the transport layer being the PC5-RRC transport layer, sending an RRC message to the second terminal, in which a header of the RRC message includes a third field, and the third field is used to carry the identifier information for session distinguishing.

Optionally, in an embodiment of the disclosure, the sending module 1401 is configured to carry the identifier information for session distinguishing in the transport layer, including:
in response to the transport layer being the PC5-U transport layer, mapping the SLPP message and/or the RSPP message to a PDU session and/or a QoS flow according to the identifier information for session distinguishing.

Optionally, in an embodiment of the disclosure, the sending module 1401 is configured to carry the identifier information for session distinguishing in the transport layer, including:
in response to the transport layer being the NAS transport layer, sending a NAS message to the second terminal, in which the NAS message includes a fourth field, and the fourth field is used to carry the identifier information for session distinguishing.

Optionally, in an embodiment of the disclosure, the sending module 1401 is configured to send the identifier information for session distinguishing to the second terminal, including:
in response to establishing an SLPP session and/or an RSPP session with the second terminal, sending the identifier information for session distinguishing to the second terminal.

Optionally, in an embodiment of the disclosure, the identifier information for session distinguishing is unique.

Optionally, in an embodiment of the disclosure, the sending module 1401 is configured to:
determining the identifier information for session distinguishing according to a session usage ID, in which the session usage ID is used for indicating that a session ID corresponding to the session usage ID will not be used as the identifier information for session distinguishing within a first duration.

Optionally, in an embodiment of the disclosure, the identifier information for session distinguishing includes at least one of:
a session ID information; or
a routing ID information.

FIG. 15 is a schematic diagram of an apparatus 1500 for distinguishing a session provided by an embodiment of the disclosure. As illustrated in FIG. 15, the apparatus 1500 may be configured in a second terminal. The apparatus 1500 includes:
a receiving module 1501, configured to, in response to receiving an SLPP message and/or an RSPP message sent by a first terminal, receive identifier information for session distinguishing sent by the first terminal.

In conclusion, in the session distinguishing apparatus of the embodiments of the disclosure, when receiving the SLPP message and/or RSPP message sent by the first terminal, the receiving module receives the identifier information for session distinguishing sent by the first terminal. In these embodiments of the disclosure, a session distinguishing mechanism is provided, i.e., receiving the SLPP message and/or the RSPP message and the identifier information for session distinguishing sent by the first terminal, to reduce the situation that the second terminal cannot determine the session corresponding to the SLPP message and/or the RSPP message if the first terminal only sends the SLPP message and/or the RSPP message to the second terminal. The disclosure provides a processing apparatus for a "session distinguishing" scenario. The apparatus determines the session corresponding to the SLPP message and/or the RSPP message according to the identifier information for session distinguishing, so as to improve an accuracy of interacting messages, improve an accuracy of the SLPP message and/or the RSPP message determination, and improve an accuracy of positioning information determination.

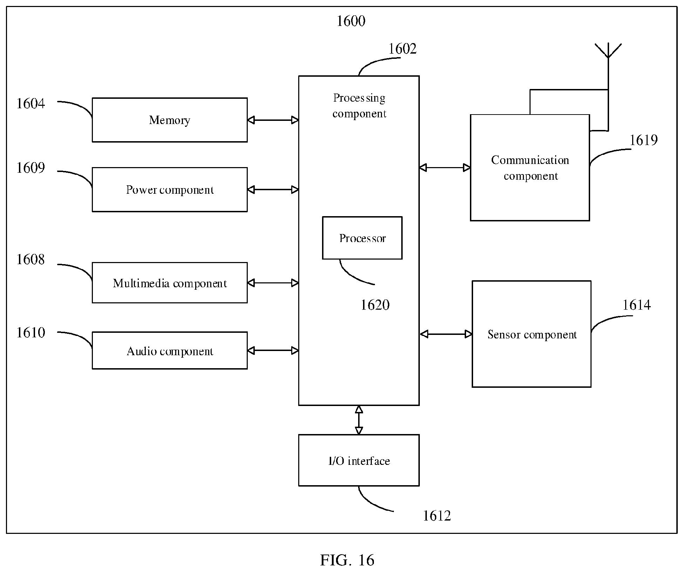

FIG. 16 is a block diagram of a UE (terminal) 1600 illustrated provided by an embodiment of the disclosure. For example, the UE 1600 may be a mobile phone, a computer, a digital broadcasting UE, a message transceiver device, a game console, a tablet device, a medical device, a fitness device or a personal digital assistant.

As illustrated in FIG. 16, the UE 1600 includes at least one of the following components: a processing component 1602, a memory 1604, a power component 1606, a multimedia component 1608, an audio component 1610, an input/output (I/O) interface 1612, a sensor component 1614, and a communication component 1616.

The processing component 1602 typically controls overall operations of the UE 1600, such as the operations associated with display, telephone calls, data communications, camera operations, and recording operations. The processing component 1602 may include at least one processor 1620 to perform all or part of the steps in the above described methods when executing instructions. Moreover, the processing component 1602 may include at least one module which facilitate the processing component 1602 to interact with other components. For example, the processing component 1602 may include a multimedia module to facilitate the processing component 1602 to interact with the multimedia component 1608.

The memory 1604 is configured to store various types of data to support the operation of the UE 1600. Examples of such data include instructions for any applications or methods operated on the UE 1600, contact data, phonebook data, messages, pictures, video, etc. The memory 1604 may be implemented using any type of volatile or non-volatile memory devices, or a combination thereof, such as a Static Random-Access Memory (SRAM), an Electrically-Erasable Programmable Read Only Memory (EEPROM), an Erasable Programmable Read Only Memory (EPROM), a Programmable Read Only Memory (PROM), a Read Only Memory (ROM), a magnetic memory, a flash memory, a magnetic or optical disk.

The power component 1606 provides power to various components of the UE 1600. The power component 1606 may include a power management system, at least one power source, and any other components associated with the generation, management, and distribution of power in the UE 1600.

The multimedia component 1608 includes a screen providing an output interface between the UE 1600 and the user. In some embodiments, the screen may include a Liquid Crystal Display (LCD) and a Touch Panel (TP). If the screen includes the touch panel, the screen may be implemented as a touch screen to receive input signals from the user. The touch panel includes at least one touch sensor to sense touches, swipes, and gestures on the touch panel. The touch sensor may not only sense a boundary of a touch or swipe action, but also sense a period of wakeup time and a pressure associated with the touch or swipe action. In some embodiments, the multimedia component 1608 includes a front-facing camera and/or a rear-facing camera. When the UE 1600 is in an operating mode, such as a shooting mode or a video mode, the front-facing camera and/or the rear-facing camera can receive external multimedia data. Each front-facing camera and rear-facing camera may be a fixed optical lens system or has focal length and optical zoom capability.

The audio component 1610 is configured to output and/or input audio signals. For example, the audio component 1610 includes a microphone (MIC) configured to receive an external audio signal when the UE 1600 is in an operation mode, such as a call mode, a recording mode, and a voice recognition mode. The received audio signal may be further stored in the memory 1604 or transmitted via the communication component 1616. In some embodiments, the audio component 1610 further includes a speaker to output audio signals.

The I/O interface 1612 provides an interface between the processing component 1602 and peripheral interface modules, such as a keyboard, a click wheel, buttons, and the like. The buttons may include, but are not limited to, a home button, a volume button, a starting button, and a locking button.

The sensor component 1614 includes at least one sensor to provide status assessments of various aspects of the UE 1600. For instance, the sensor component 1614 may detect an open/closed status of the UE 1600, relative positioning of components, e.g., the display and the keypad, of the UE 1600, a change in position of the UE 1600 or a component of the UE 1600, a presence or absence of user contact with the UE 1600, an orientation or an acceleration/deceleration of the UE 1600, and a change in temperature of the UE 1600. The sensor component 1614 may include a proximity sensor configured to detect the presence of nearby objects without any physical contact. The sensor component 1614 may also include a light sensor, such as a Complementary Metal Oxide Semiconductor (CMOS) or Charge-Coupled Device (CCD) image sensor, for use in imaging applications. In some embodiments, the sensor component 1614 may also include an accelerometer sensor, a gyroscope sensor, a magnetic sensor, a pressure sensor, or a temperature sensor.

The communication component 1616 is configured to facilitate communication, wired or wirelessly, between the UE 1600 and other devices. The UE 1600 can access a wireless network based on a communication standard, such as Wi-Fi, 2G or 3G, or a combination thereof. In an exemplary embodiment, the communication component 1616 receives a broadcast signal or broadcast associated information from an external broadcast management system via a broadcast channel. In an exemplary embodiment, the communication component 1616 further includes a Near Field Communication (NFC) module to facilitate short-range communications. For example, the NFC module may be implemented based on a Radio Frequency Identification (RFID) technology, an Infrared Data Association (IrDA) technology, an Ultra-Wide Band (UWB) technology, a Blue Tooth (BT) technology, and other technologies.

In some exemplary embodiments, the UE 1600 may be implemented with at least one Application Specific Integrated Circuit (ASIC), Digital Signal Processor (DSP), Digital Signal Processing Device (DSPD), Programmable Logic Device (PLD), Field Programmable Gate Array (FPGA), controller, micro-controller, microprocessor or other electronic components, for performing the above described methods.

The above-described methods provided in the embodiments of the disclosure are described from the perspectives of the network side device and the UE, respectively. In order to realize each of the functions in the methods provided by the above embodiments of the disclosure, the network side device and the UE may include a hardware structure and/or a software module, and realize each of the above functions in the form of a hardware structure, a software module, or a combination of the hardware structure and the software module. A certain function of the above-described functions may be performed in the form of a hardware structure, a software module, or a combination of the hardware structure and the software module.

The above-described methods provided in the embodiments of the disclosure are described from the perspectives of the network side device and the UE, respectively. In order to realize each of the functions in the methods provided by the above embodiments of the disclosure, the network side device and the UE may include a hardware structure and/or a software module, and realize each of the above functions in the form of a hardware structure, a software module, or a combination of the hardware structure and the software module. A certain function of the above-described functions may be performed in the form of a hardware structure, a software module, or a combination of the hardware structure and the software module.

An embodiment of the disclosure provides a communication device. The communication device includes: a transceiver module and a processing module. The transceiver module may include a sending module and/or a receiving module. The sending module is configured to realize a sending function, and the receiving module is configured to realize a receiving function, so that the transceiver module is configured to realize the sending function and/or the receiving function.

The communication device may be a terminal (such as the terminal in the aforementioned method embodiments), a device in the terminal, or a device that can be used together with the terminal. Alternatively, the communication device may be a network device, a device in the network device, or a device that can be used together with the network device.

An embodiment of the disclosure provides another communication device. The communication device may be a network device, a terminal (e.g., the terminal in the method embodiments described above), or a chip, a chip system or a processor that supports the network device to realize the above-described methods, or a chip, a chip system or a processor that supports the terminal to realize the above-described methods. The device may be used to realize the methods described in the above method embodiments with reference to the descriptions of the above-described method embodiments.

The communication device may include one or more processors. The processor may be a general purpose processor or a dedicated processor, such as, a baseband processor or a central processor. The baseband processor is used for processing communication protocols and communication data. The central processor is used for controlling the communication device (e.g., network side device, baseband chip, terminal, terminal chip, a central unit (CU), or a distributed unit (DU)), executing computer programs, and processing data of the computer programs.

Optionally, the communication device may further include one or more memories on which computer programs may be stored. When the processor executes the computer programs, the communication device is caused to perform the methods described in the above method embodiments. Optionally, the memory may also store data. The communication device and the memory may be provided separately or may be integrated together.

Optionally, the communication device may also include a transceiver and an antenna. The transceiver may be referred to as transceiver unit, transceiver machine, or transceiver circuit, for realizing a transceiver function. The transceiver may include a receiver and a transmitter. The receiver may be referred to as receiver machine or receiving circuit, for realizing the receiving function. The transmitter may be referred to as transmitter machine or transmitting circuit, for realizing the transmitting function.

Optionally, the communication device may also include one or more interface circuits. The interface circuits are used to receive code instructions and transmit the code instructions to the processor. The processor runs the code instructions to cause the communication device to perform the methods described in the method embodiments.

If the communication device is a first terminal (such as the terminal in the aforementioned method embodiments), the processor is configured to execute the method shown in any one of FIGS. 2-12.

If the communication device is a second terminal (such as the terminal in the aforementioned method embodiments), the processor is configured to execute the method shown in FIG. 13.

In an implementation, the processor may include a transceiver for implementing the receiving and transmitting functions. The transceiver may be, for example, a transceiver circuit, an interface, or an interface circuit. The transceiver circuit, interface, or interface circuit for implementing the receiving and transmitting functions may be separated or may be integrated together. The transceiver circuit, interface, or interface circuit described above may be used for code/data reading and writing, or may be used for signal transmission or delivery.

In an implementation, the processor may store computer programs. When the processor runs the computer programs, the communication device is caused to perform the methods described in the method embodiments above. The computer programs may be solidified in the processor, in which case the processor may be implemented by hardware.

In an implementation, the communication device may include circuits. The circuits may implement the sending, receiving or communicating function in the preceding method embodiments. The processors and transceivers described in the disclosure may be implemented on integrated circuits (ICs), analog ICs, radio frequency integrated circuits (RFICs), mixed signal ICs, application specific integrated circuits (ASICs), printed circuit boards (PCBs), and electronic devices. The processors and transceivers can also be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication device described above in the embodiments may be a network device or a terminal (such as the terminal in the aforementioned method embodiments), but the scope of the communication device described in the disclosure is not limited thereto, and the structure of the communication device may not be limited by FIG. 16. The communication device may be a stand-alone device or may be part of a larger device. For example, the communication device may be:
(1) a stand-alone IC, chip, chip system or subsystem;
(2) a collection of ICs including one or more ICs, optionally, the collection of ICs may also include storage components for storing data and computer programs;
(3) an ASIC, such as a modem;
(4) modules that can be embedded within other devices;
(5) receivers, terminals, smart terminals, cellular phones, wireless devices, handheld machines, mobile units, in-vehicle devices, network devices, cloud devices, artificial intelligence devices, and the like; and
(6) others.

In the case where the communication device may be a chip or a chip system, the chip includes a processor and an interface. There may be one or more processors, and there may be multiple interfaces.

Optionally, the chip further includes a memory used for storing necessary computer programs and data.

It is understandable by those skilled in the art that various illustrative logical blocks and steps listed in the embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described functions, but such implementations should not be construed as being beyond the scope of protection of the embodiments of the disclosure.

The disclosure also provides a readable storage medium having instructions stored thereon. When the instructions are executed by a computer, the function of any of the method embodiments described above is implemented.

The disclosure also provides a computer program product. When the computer program product is executed by a computer, the function of any of the method embodiments described above is implemented.

The above embodiments may be implemented in whole or in part by software, hardware, firmware, or any combination thereof. When implemented using software, it may be implemented, in whole or in part, in the form of a computer program product. The computer program product includes one or more computer programs. When loading and executing the computer programs on the computer, all or part of processes or functions described in the embodiments of the disclosure are implemented. The computer may be a general-purpose computer, a dedicated computer, a computer network, or other programmable devices. The computer programs may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., by using coaxial cables, fiber optics, or digital subscriber lines (DSLs) or wirelessly (e.g., by using infrared wave, wireless wave, or microwave). The computer-readable storage medium may be any usable medium to which the computer has access or a data storage device integrated by one or more usable mediums, such as a server or a data center. The usable medium may be a magnetic medium (e.g., floppy disk, hard disk, and tape), an optical medium (e.g., a high-density digital video disc (DVD)), or a semiconductor medium (e.g., a solid state disk (SSD)).

Those skilled in the art understand that "first", "second", and other various numerical numbers involved in the disclosure are only described for the convenience of differentiation, and are not used to limit the scope of the embodiments of the disclosure, or indicate the order of precedence.

The term "at least one" in the disclosure may also be described as one or more, and the term "multiple" may be two, three, four, or more, which is not limited in the disclosure. In the embodiments of the disclosure, for a type of technical features, "first", "second", and "third", and "A", "B", "C" and "D" are used to distinguish different technical features of the type, the technical features described using the "first", "second", and "third", and "A", "B", "C" and "D" do not indicate any order of precedence or magnitude.

Other embodiments of the disclosure will be apparent to those skilled in the art from consideration of the specification and practice of the disclosure disclosed here. The disclosure is intended to cover any variations, uses, or adaptations of the disclosure following the general principles thereof and including such departures from the disclosure as come within known or customary practice in the art. It is intended that the specification and examples are considered as exemplary only, with a true scope and spirit of the disclosure being indicated by the attached claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the attached claims.

## Claims

1. A session distinguishing method, performed by a first terminal, comprising:
in response to sending a sidelink positioning protocol (SLPP) message and/or a ranging and sidelink positioning protocol (RSPP) message to a second terminal, sending identifier information for session distinguishing to the second terminal.

2. The method of claim 1, wherein in response to sending the SLPP message and/or the RSPP message to the second terminal, sending the identifier information for session distinguishing to the second terminal, comprises:
sending the SLPP message and/or the RSPP message to the second terminal, wherein the SLPP message and/or the RSPP message comprises the identifier information for session distinguishing.

3. The method of claim 1, wherein in response to sending the SLPP message and/or the RSPP message to the second terminal, sending the identifier information for session distinguishing to the second terminal, comprises:
in response to sending the SLPP message and/or the RSPP message to the second terminal, carrying the identifier information for session distinguishing in a transport layer, wherein the transport layer is configured to bear the SLPP message and/or the RSPP message.

4. The method of claim 3, wherein the transport layer comprises at least one of:
a PC5-signaling (PC5-S) transport layer;
a PC5-user plane (PC5-U) transport layer;
a control plane packet data convergence protocol (PDCP) transport layer;
a PC5-radio resource control (PC5-RRC) transport layer; or
a non-access stratum (NAS) transport layer.

5. The method of claim 4, wherein carrying the identifier information for session distinguishing in the transport layer, comprises:
in response to the transport layer being the PDCP transport layer, adding a first field to a PDCP header of a PDCP Data protocol data unit (PDU), wherein the first field is configured to carry the identifier information for session distinguishing.

6. The method of claim 4, wherein carrying the identifier information for session distinguishing in the transport layer, comprises:
in response to the transport layer being the PC5-S transport layer, sending a PC5-S message to the second terminal, wherein the PC5-S message comprises a second field, and the second field is configured to carry the identifier information for session distinguishing.

7. The method of claim 4, wherein carrying the identifier information for session distinguishing in the transport layer, comprises:
in response to the transport layer being the PC5-RRC transport layer, sending an RRC message to the second terminal, wherein a header of the RRC message comprises a third field, and the third field is configured to carry the identifier information for session distinguishing.

8. The method of claim 4, wherein carrying the identifier information for session distinguishing in the transport layer, comprises:
in response to the transport layer being the PC5-U transport layer, mapping the SLPP message and/or the RSPP message to a PDU session and/or a quality of service (QoS) flow according to the identifier information for session distinguishing.

9. The method of claim 4, wherein carrying the identifier information for session distinguishing in the transport layer, comprises:
in response to the transport layer being the NAS transport layer, sending a NAS message to the second terminal, wherein the NAS message comprises a fourth field, and the fourth field is configured to carry the identifier information for session distinguishing.

10. The method of claim 1, wherein sending the identifier information for session distinguishing to the second terminal, comprises:
in a case of establishing an SLPP session and/or an RSPP session with the second terminal, sending the identifier information for session distinguishing to the second terminal.

11. The method of claim 1, wherein the identifier information for session distinguishing is unique.

12. The method of claim 11, further comprising:
determining the identifier information for session distinguishing according to a session usage identifier, wherein the session usage identifier indicates that a session identifier corresponding to the session usage identifier is not be used as the identifier information for session distinguishing within a first duration.

13. The method of any one of claims 1-12, wherein the identifier information for session distinguishing comprises at least one of:
session identifier information; or
routing identifier information.

14. A session distinguishing method, performed by a second terminal, comprising:
in a case of receiving a sidelink positioning protocol (SLPP) message and/or a ranging and sidelink positioning protocol (RSPP) message sent by a first terminal, receiving identifier information for session distinguishing sent by the first terminal.

15. A session distinguishing apparatus, configured on a first terminal, comprising:
a sending module, configured to, in response to sending a sidelink positioning protocol (SLPP) message and/or a ranging and sidelink positioning protocol (RSPP) message to a second terminal, send identifier information for session distinguishing to the second terminal.

16. A session distinguishing apparatus, configured on a second terminal, comprising:
a receiving module, configured to, in a case of receiving a sidelink positioning protocol (SLPP) message and/or a ranging and sidelink positioning protocol (RSPP) message sent by a first terminal, receive identifier information for session distinguishing sent by the first terminal.

17. A first terminal, comprising a processor and a memory, wherein the memory stores a computer program, and the processor executes the computer program stored in the memory to cause the terminal to execute the method of any one of claims 1-13.

18. A second terminal, comprising a processor and a memory, wherein the memory stores a computer program, and the processor executes the computer program stored in the memory to cause the terminal to execute the method of claim 14.

19. A communication device, comprising a processor and an interface circuit,
wherein the interface circuit is configured to receive code instructions and transmit the code instructions to the processor; and
the processor is configured to run the code instructions to execute the method of any one of claims 1-13 or the method of claim 14.

20. A computer-readable storage medium, wherein the storage medium is configured to store instructions, and when the instructions are executed, the method of any one of claims 1-13 or the method of claim 14 is implemented.
